(19)

Europäisches
Patentamt

European
Patent Office

Office européen
des brevets

(11) **EP 3 301 589 A1**

(12) **EUROPEAN PATENT APPLICATION**

(43) Date of publication:
**04.04.2018 Bulletin 2018/14**

(51) Int Cl.:
*G06F 17/30* [(2006.01)]    *G06Q 10/10* [(2012.01)]

(21) Application number: **17152851.6**

(22) Date of filing: **24.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.09.2016 IN 201641033515**

(71) Applicant: **Wipro Limited
560 035 Karnataka (IN)**

(72) Inventors:
• **Hosabettu, Raghavendra
560085 Bangalore (IN)**
• **Ramanna, Ramprasad Kanakatte
560103 Bangalore (IN)**
• **Mannopantar, Raghottam
560076 Bangalore (IN)**

(74) Representative: **Finnegan Europe LLP
16 Old Bailey
London EC4M 7EG (GB)**

(54) **METHODS AND SYSTEMS FOR CREATING NEW PRESENTATIONS USING EXISTING PRESENTATIONS**

(57)    A method for creating a presentation includes gathering presentation requirements and configuration settings associated with the presentation requirements from a user. The method further includes identifying a plurality of existing slides satisfying the presentation requirements and the configuration settings gathered from the user. Confidence scores are thereafter computed for each of the plurality of existing slides across a plurality of categories. An overall confidence score for each of the plurality of existing slides is determined using: the confidence scores computed for each existing slide across the plurality of categories, weights associated with each of the plurality of categories, and a dynamicity index, when associated with an existing slide. One or more of the plurality of existing slides, for which overall confidence score is below a final associated threshold confidence score, are removed. Thereafter, a list of remaining existing slides is displayed to the user.

FIG . 2

EP 3 301 589 A1

**Description**

Technical Field

This disclosure relates generally to creating presentations and more particularly to methods and systems for creating new presentations using existing presentations.

Background

Use of presentation software (for example, Microsoft's PowerPoint®) over a period of time results in a plethora of presentations and each presentation further includes multiple slides. These old presentations have a lot of useful content, which can be used while creating new presentations, thus avoiding reinventing the wheel.

In a conventional method, old presentations are reused to create new presentations. However, it requires a user to manually go through these old presentations and extract slides that the user identifies as relevant in order to create a new presentation. This is a time-consuming methodology that requires user involvement to identify relevant presentations and to extract specific information that is desired by the user.

**SUMMARY**

In one embodiment, a method for creating a presentation is disclosed. The method includes gathering, by a presentation creating device, presentation requirements and configuration settings associated with the presentation requirements from a user; identifying, by the presentation creating device, a plurality of existing slides satisfying the presentation requirements and the configuration settings gathered from the user; computing, by the presentation creating device, confidence scores for each of the plurality of existing slides across a plurality of categories associated with the presentation requirements gathered from the user; determining, by the presentation creating device, an overall confidence score for each of the plurality of existing slides using: the confidence scores computed for each existing slide across the plurality of categories, weights associated with each of the plurality of categories, and a dynamicity index, when associated with an existing slide; removing, by the presentation creating device, at least one of the plurality of existing slides, wherein the overall confidence score for the at least one of the plurality of existing slide is below a final threshold confidence score; displaying, on a display, a list of remaining existing slides from the plurality of existing slides to the user in decreasing order of the overall confidence score computed for each of the remaining existing slides, wherein the list of remaining existing slides is obtained after removal of the at least one of the plurality of existing slides; receiving, by the presentation creating device, user modification of the list of remaining existing slides by the user, wherein the user modification comprises at least one of: selecting at least one new existing slide for inclusion in the list or de-selecting at least one of the remaining existing slides for exclusion from the list; and altering, by the presentation creating device, dynamicity index of at least one of: the at least one new existing slide or the at least one remaining existing slide in response to receiving the user modification.

In another embodiment, a presentation creating system is disclosed. The presentation creating system includes at least one processors and a computer-readable medium. The computer-readable medium stores instructions that, when executed by the at least one processor, cause the at least one processor to perform operations that include identifying a plurality of existing slides satisfying the presentation requirements and the configuration settings gathered from the user; computing confidence scores for each of the plurality of existing slides across a plurality of categories associated with the presentation requirements gathered from the user; determining an overall confidence score for each of the plurality of existing slides using: the confidence scores computed for each existing slide across the plurality of categories, weights associated with each of the plurality of categories, and a dynamicity index, when associated with an existing slide; removing at least one of the plurality of existing slides, wherein the overall confidence score for the at least one of the plurality of existing slide is below a final threshold confidence score; displaying a list of remaining existing slides from the plurality of existing slides to the user in decreasing order of the overall confidence score computed for each of the remaining existing slides, wherein the list of remaining existing slides is obtained after removal of the at least one of the plurality of existing slides; receiving user modification of the list of remaining existing slides by the user, wherein the user modification comprises at least one of: selecting at least one new existing slide for inclusion in the list or de-selecting at least one of the remaining existing slides for exclusion from the list; and altering dynamicity index of at least one of: the at least one new existing slide or the at least one remaining existing slide in response to receiving the user modification.

In yet another embodiment, a non-transitory computer-readable storage medium for creating a presentation is disclosed, which when executed by a computing device, cause the computing device to: identify a plurality of existing slides satisfying the presentation requirements and the configuration settings gathered from the user; compute confidence scores for each of the plurality of existing slides across a plurality of categories associated with the presentation requirements gathered from the user; determine an overall confidence score for each of the plurality of existing slides using: the confidence scores computed for each existing slide across the plurality of categories, weights associated with each of the plurality of categories, and a dynamicity index, when associated with an existing slide; remove at least one of the plurality of existing slides, wherein the overall confidence score for the at least one of the plurality of existing slide is below a final threshold confidence score; display a list of remaining existing slides from the plurality of existing slides to the user in decreasing order of the overall confidence score computed for each of the remaining existing slides, wherein the list of remaining existing slides is obtained after removal of the at least one of the plurality of existing slides; receive user modification of the list of remaining existing slides by the user, wherein the user modification comprises at least one of: select at least one new existing slide for inclusion in the list or de-selecting at least one of the remaining existing slides for exclusion from the list; and alter dynamicity index of at least one of: the at least one new existing slide or the at least one remaining existing slide in response to receiving the user modification.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

**FIG. 1** illustrates a block diagram of an exemplary computer system for implementing various embodiments.
**FIG. 2** is a block diagram illustrating various components of a presentation creating system, in accordance with an embodiment.
**FIG. 3** illustrates a flowchart of a method for creating a presentation using existing presentations, in accordance with an embodiment.
**FIG. 4** illustrates a flowchart of a method for computing confidence scores for existing slides and removing one or more existing slides based on the confidence scores, in accordance with an embodiment.
**FIG. 5** illustrates a flowchart of a method for modifying dynamicity index associated with existing slides, in accordance with an embodiment.
**FIGs. 6A, 6B, and 6C** illustrate Graphical User Interfaces (GUIs) used to gather presentation requirements, configurations settings, and user modification of a list of remaining existing slides, in accordance with an exemplary embodiment.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

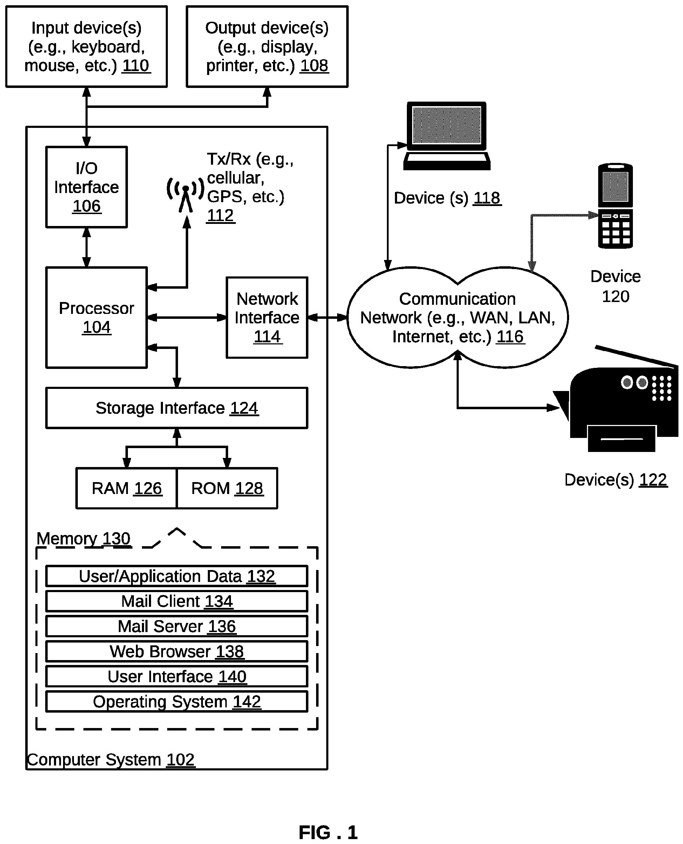

Additional illustrative embodiments are listed below. In one embodiment, a block diagram of an exemplary computer system for implementing various embodiments is disclosed in FIG. 1. Computer system 102 may comprise a central processing unit ("CPU" or "processor") 104. Processor 104 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. Processor 104 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 104 may be disposed in communication with one or more input/output (I/O) devices via an I/O interface 106. I/O interface 106 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 106, computer system 102 may communicate with one or more I/O devices. For example, an input device 108 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 110 may be a printer, fax machine, video display (e.g., cathode ray tube (CRT), liquid crystal display (LCD), light-emitting diode (LED), plasma, or the like), audio speaker, etc. In some embodiments, a transceiver 112 may be disposed in connection with processor 104. Transceiver 112 may facilitate various types of wireless transmission or reception. For example, transceiver 112 may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, processor 104 may be disposed in communication with a communication network 114 via a network interface 116. Network interface 116 may communicate with communication network 114. Network interface 116 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. Communication network 114 may include, without limitation, a direct interconnection, local area network (LAN), wide area network (WAN), wireless network (e.g., using Wireless Application Protocol), the Internet, etc. Using network interface 116 and communication network 114, computer system 102 may communicate with devices 118, 120, and 122. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, computer system 102 may itself embody one or more of these devices.

In some embodiments, processor 104 may be disposed in communication with one or more memory devices (e.g., RAM 126, ROM 128, etc.) via a storage interface 124. Storage interface 124 may connect to memory devices 130 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory devices 130 may store a collection of program or database components, including, without limitation, an operating system 132, a user interface application 134, a web browser 136, a mail server 138, a mail client 140, a user/application data 142 (e.g., any data variables or data records discussed in this disclosure), etc. Operating system 132 may facilitate resource management and operation of the computer system 102. Examples of operating system 132 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 134 may facilitate display, execution, interaction, manipulation, or operation of program components through textual or graphical facilities. For example, user interfaces may provide computer interaction interface elements on a display system operatively connected to computer system 102, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, computer system 102 may implement web browser 136 stored program component. Web browser 136 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, computer system 102 may implement mail server 138 stored program component. Mail server 138 may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, computer system 102 may implement mail client 140 stored program component. Mail client 140 may be a mail viewing application, such as Apple Mail, Microsoft Entourage, Microsoft Outlook, Mozilla Thunderbird, etc.

In some embodiments, computer system 102 may store user/application data 142, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

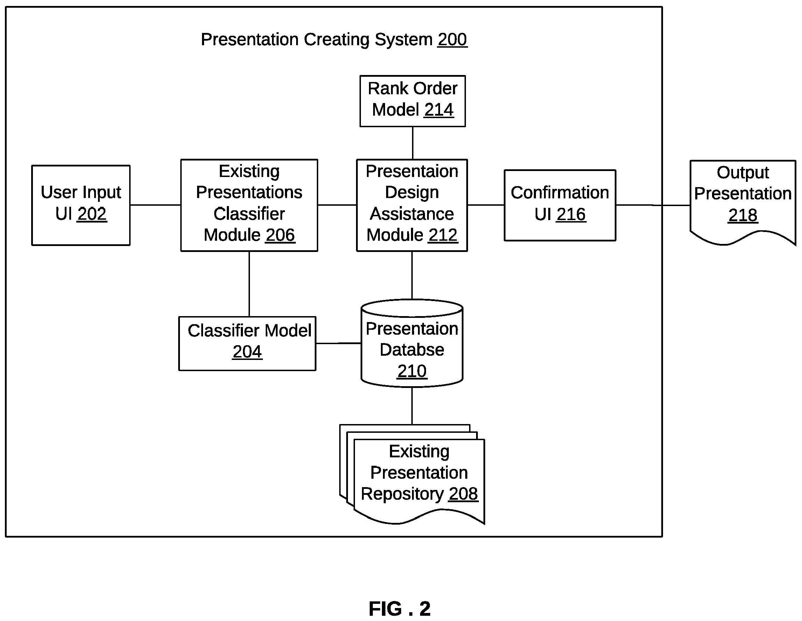

Referring now to FIG. 2, a block diagram of a presentation creating system 200 and its various components is illustrated, in accordance with an embodiment. In an embodiment, presentation creating system 200 may be created using a BOT studio, which has been described in detail in: European Patent Application No. 16177316.3 filed on 30 June 2016 and Indian Patent Application No: 201641009412 filed on 17 March 2016, both titled: "METHOD AND SYSTEM FOR DYNAMICALLY INTEGRATING BOTS"; and European Patent Application No. 16180595.7 filed on 21 July 2016 and Indian Patent Application No: 201641009861 filed on 21 March 2016, both titled: "METHODS FOR CREATING AUTOMATED DYNAMIC WORKFLOWS OF INTEROPERABLE BOTS AND DEVICES THEREOF," all four of which applications are incorporated herein by reference. When presentation creating system 200 is created using the BOT studio, several BOT types are created by a hypothesis work bench (not shown in FIG. 2). These BOT types are then used to create various BOTs that can easily coordinate with and complement each other, as these BOT types have common structure.

Presentation creating system 200 includes a user input User Interface (UI) 202 through which presentation requirements and configuration settings are gathered from a user. The presentation requirements may include one or more of: search strings indicating presentation content, audience type preference, technical or non-technical nature of content, source of data used to create existing presentations, roles of existing presentation creators, or relevance of presenter notes.

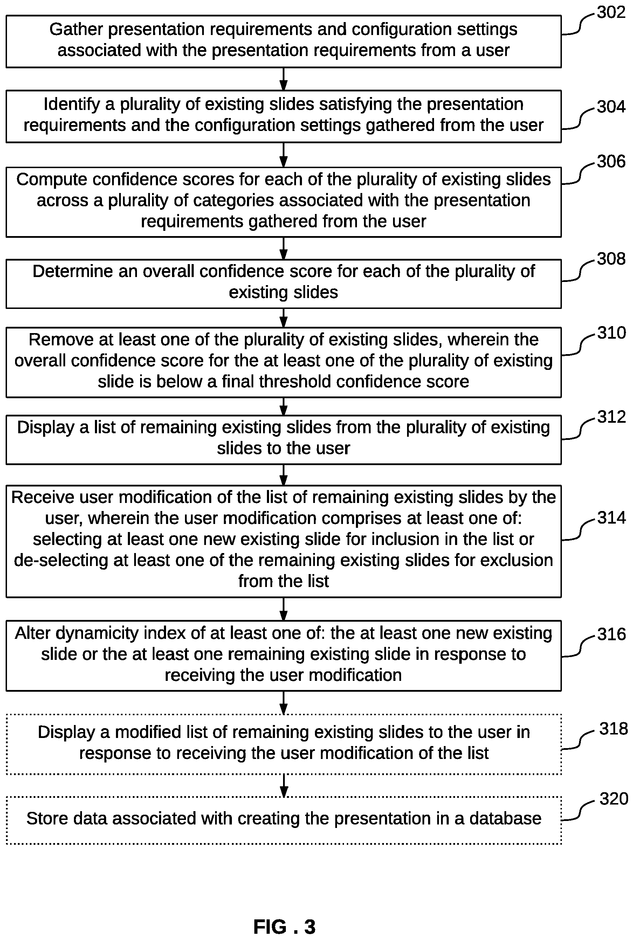

The configurations settings may include one or more of, but is not limited to a previously stored configuration setting, mapping of user defined roles to system defined roles, a plurality of audience types, association of one of the plurality of audience types with at least one section within the presentation, maximum and minimum number of slides associated with each section of the presentation, percentage of technical and non-technical content associated with each section of the presentation, or type of source associated with each section of the presentation. The presentation requirements and the configurations settings are explained in detail in conjunction with FIG. 3.

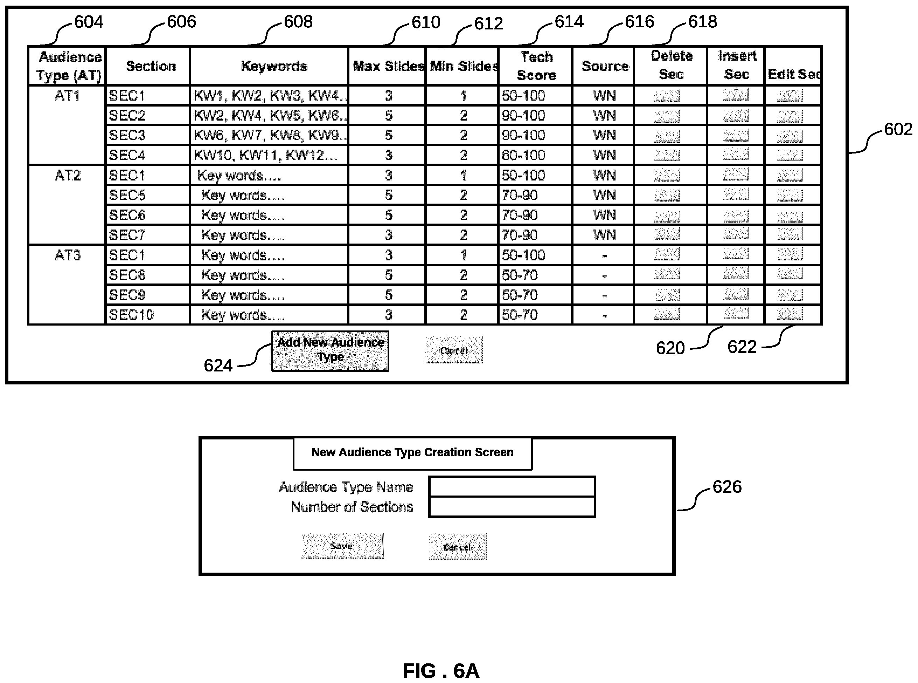

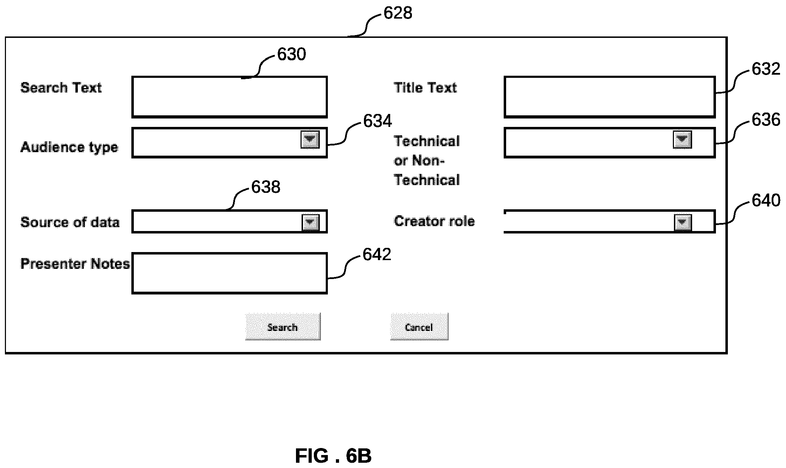

The information thus gathered is used to extract existing presentations that are relevant for creation of the presentation. This gathered information may be stored along with name of the presentation in a database. This is further explained in detail in conjunction with FIGs. 3, 6A, and 6B.

The information captured through user input UI 202 is analyzed by a classifier model 204 to determine a theme of the presentation being created. Classifier model 204 may use a Natural Language Processing (NLP) algorithm to achieve this. Once the theme of the presentation is determined by breaking down information gathered from the user, an existing presentations classifier module 206 uses this information to search for existing slides that match the user requirement. Existing presentations classifier module 206 performs an analysis on a plurality of existing slides that are stored in an existing presentation repository 208. The analysis is performed on the data associated with these existing slides, which is stored in a presentation database 210. The data is extracted from one or more of the plurality of existing slides that are relevant and is then used to create the presentation.

The data on which the analysis is performed by existing presentations classifier module 206, may include, but is not limited to presentation name, slide number, title of slide, slide contents, creator of presentation/slide, role or designation of the creator, and date and time of creation/modification. The data for these slides may be saved in a csv file. Existing presentations classifier module 206 may be trained with a set of existing slides. In an embodiment, when the BOT studio is used to create presentation creating system 200, existing presentations classifier module 206 would be a BOT created based on a classifier BOT Type (not shown in FIG. 2). The classifier BOT type is created using the hypothesis work bench. In this case, existing presentations classifier module 206 (which is a BOT) will be configured with the below mentioned information:

| Training Algorithm | This will train the data either in Similarity model or Ridge Model or both |
| --- | --- |
| Similarity Model | Used by the BOT for existing presentations classifier module 206 to find similar information |
| Ridge Model | Used by the BOT for existing presentations classifier module 206 to find similar information. For each file (presentation) uploaded one model may be created |

Once this bot is created and deployed, it will be ready for serving using its API, which would be exposed by the classifier BOT. The input for the API is the presentation requirements and the configurations settings provided by the user. The API outputs existing slides which match user specified criteria provided through user input UI 202.

Thereafter, a presentation design assistance module 212 receives details associated with the plurality of existing slides from existing presentations classifier module 206. Presentation design assistance module 212 then uses these details for filtering the plurality of existing slides based on the presentation requirements and the configuration settings. To filter the plurality of existing slides, confidence scores are computed for the plurality of existing slides using confidence score calculation rules defined in a rank order model 214. The computation of scores for the plurality of existing slides and subsequent filtering based on these confidence scores is explained in detail in conjunction with FIG. 3. In an embodiment, when the BOT studio is used to create presentation creating system 200, presentation design assistance module 212 would be a BOT that is created based on a presentation design assistant BOT type (not shown in FIG. 2). This BOT type is also created by the hypothesis work bench.

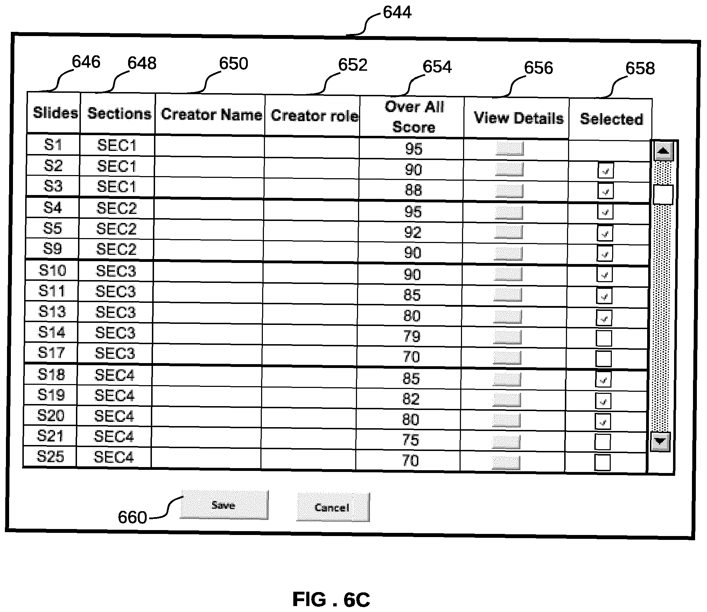

Subsequent to filtering, the remaining existing slides are displayed to a user through a confirmation UI 216, using which the user may de-select one or more remaining existing slides or may add a new existing slide. This is further explained in detail in conjunction with FIG. 3 and the exemplary embodiment given in FIG. 6C. Thereafter, an output presentation 218 is created using the finalized existing slides. Output presentation 218 is then added to existing presentation repository 208.

Referring now to FIG. 3, a flowchart of a method for creating a presentation using existing presentations is illustrated, in accordance with an embodiment. The existing presentations may be stored in existing presentation repository 208 in multiple formats that may include, but are not limited to of Microsoft PowerPoint, Adobe PDF, Google Slide, Keynote, Haiku Deck, and Flash. In an embodiment, various formats in which the existing presentations are stored may first be converted into a common format, for example, Microsoft PowerPoint.

To create the presentation, presentation requirements and configuration settings associated with the presentation requirements are gathered from a user at 302. These may be gathered via a Graphical User Interface (GUI) that includes predefined fields configured to receive the presentation requirements and the configuration settings. The GUI is explained in an exemplary embodiment given in FIGs. 6A and 6B.

The presentation requirements may include one or more of: search strings indicating presentation content, audience type preference, technical or non-technical nature of content, source of data used to create existing presentations, roles of existing presentation creators, or relevance of presenter notes. The GUI may have separate fields or elements to gather each of these presentation requirements. These presentation requirements are used to search presentation database 210 that includes data associated with existing presentations stored in existing presentation repository 208.

The search strings may be entered to search full text of the existing presentations and/or to search titles of the existing presentations. Search strings may also be entered to search text of presenter notes, if included in one or more of the existing presentations. Search strings may include free text or may be a combination of keywords and Boolean operators.

The audience type preference may be selected using a drop-down list that includes different audience types. These audience types may either be system defined or may be defined by the user while providing the configuration settings. Similarly, technical or non-technical nature of content, source of data used to create the existing presentations, and roles of existing presentation creators, may also be selected using a drop down list created for each of these performance requirements. This is further explained in detail in conjunction with FIGs. 6A, 6B, and 6C. A drop-down list may also be provided to select whether presenter notes included in existing presentation should be given relevance while searching the existing presentations. By way of an example, a drop down list that include options of "Yes" and "No" may be provided on the GUI for a query that reads: "Should presenter notes be given relevance?" The user may select either of these two options, i.e., "Yes" or "No."

In an embodiment, the user may provide the presentation requirements by uploading a sample presentation. The content of the sample presentation is aligned with the presentation requirements that are required by the user to create the presentation. Once uploaded, the presentation requirements may be extracted using content and metadata associated with the sample presentation.

Along with the presentation requirements, the user also provides configuration settings associated with the presentation requirements. The configuration settings include mapping of user defined roles to system defined roles. The user may provide roles and hierarchies that are defined in his/her enterprise. As different enterprises may have different naming convention for roles and hierarchies, these have to be mapped to roles and hierarchy that are built in presentation creating system 200. Thus, the user has to provide the mapping between user provided roles and hierarchies to the system defined roles and hierarchies. In an embodiment, such mapping may be automatically performed by a presentation creating device.

The configuration settings may further include a plurality of audience types. In other words, the user may define these plurality of audience types in the system. By way of an example, the user may define two audience type sets:

Audience Type Set 1 (ATS1) illustrated in table 1 and Audience Type Set 2 (ATS 2) illustrated in table 2. Each of ATS1 and ATS2 have different audience types defined therein.

**TABLE 1**

| ATS 1 | Description |
|-------|-------------|
| Expert | Has substantial previous knowledge of the topic |
| Layman | Has little or no previous knowledge of the topic |
| Executive | Has decision-making power (perhaps even over the writer's career) |
| Technician | A hands-on operator of equipment or one involved in the execution of a technical process |
| Complex | A combination of an expert and an executive |

**TABLE 2**

| ATS 2 | Description |
|-------|-------------|
| Neutral Audience | These will be the kind of people who are directly or indirectly interested or don't want to invest in your idea. |
| Hostile Audience | These are the people who are in strong disagreement with your idea. |
| Uninformed Audience | These are people who are unfamiliar with the topic of discussion at hand. You as the speaker need to provide them with everything they need to know about the topic |
| Expert Audience | The audience here is already in tangent with what you are telling them so the biggest mistake you can do is to give them a background of the topic. |
| Business Audience | Time is money for this audience and they don't have the patience to sit through your story telling, therefore, keep it short. |

After defining these audience type sets, the user may select one of these audience type sets or a combination of these audience type sets in order to identify relevant existing slides. By way of an example, if the user provides or selects ATS1 given in the example above, the user would be able to assign the following audience types to different sections of the presentaion: Expert, Layman, Executive, Technician, and Complex. By way of another example, if the user provides or selects both the ATS1 and ATS2, the user may be able to assign a combination of audience types, i.e., "Expert and hostile audience" or "Expert and Neutral audience." It will be apparent to a person skilled in the art that any number of such audience type combinations is within the scope of the claimed invention.

The configuration settings may further include one or more of, but is not limited to association of one of the plurality of audience types with at least one section within the presentation, maximum and minimum number of slides associated with each section of the presentation, percentage of technical and non-technical content associated with each section of the presentation, or type of source associated with each section of the presentation. In an embodiment, instead of providing a percentage of technical or non-technical content, the user may provide a range or a score indicative of the amount of technical content. By way of an example, the configuration settings and their interrelationship for three audience type configurations is represented using table 3 given below:

**TABLE 3**

| Audience Type (AT) | Section | Relevant Key Words | Max Slides | Min Slides | Tech Score (%) | Source |
|---|---|---|---|---|---|---|
| AT-1 | SEC1 | KW1, KW2, KW3, KW4... | 3 | 1 | 50 | Web/Network (WN) |
| | SEC2 | KW2, KW4, KW5, KW6... | 5 | 2 | 90 | WN |
| | SEC3 | KW6, KW7, KW8, KW9... | 5 | 2 | 90 | WN |
| | SEC4 | KW10, KW11, KW12... | 3 | 2 | 60 | WN |
| AT-2 | SEC1 | Key words.... | 3 | 1 | 50 | WN |
| | SEC5 | Key words.... | 5 | 2 | 70 | WN |
| | SEC6 | Key words.... | 5 | 2 | 70 | WN |
| | SEC7 | Key words.... | 3 | 2 | 70 | WN |
| AT-3 | SEC1 | Key words.... | 3 | 1 | 50 | - |
| | SEC8 | Key words.... | 5 | 2 | 50 | - |
| | SEC9 | Key words.... | 5 | 2 | 50 | - |
| | SEC10 | Key words.... | 3 | 2 | 50 | - |

A GUI is used by the user to provide these configuration settings. The GUI is explained in detail in conjunction with FIG. 6A. In this example, the presentation that user wants to create includes ten sections and the user has assigned different audience types to different sections within the presentation. One section may be assigned multiple audience types as well. By way of an example, section 1 is assigned to all three audience types, i.e., AT-1, AT-2, and AT-3. In addition to the audience types, the user also assigns relevant keywords, maximum and minimum number of slides, percentage of technical/non-technical content, and source to be used for each section of the presentation. In continuation of the example, section 2 of the presentation is assigned the keywords: KW2, KW4, KW5, and KW6. The maximum number and minimum number of slides for the section 2 is specified as: five and two. The percentage of technical content assigned by the user to section 2 is 90%, which means that only 10% content for section 2 should be non-technical. Lastly, the user specifies that the source to be used for the section 2 is WN. Examples of other source may include, but are not limited to Other Team (OT) and own (OWN). The information provided by the user above is stored in a database and is accessed when user provides presentation requirements via a GUI.

The configuration settings provided by the user may also include various thresholds for confidence scores computed during selection of relevant existing slides. These thresholds may be modified by the user at later point of time for calibrating the system. In an embodiment, the user may be provided with an option to select one of previously stored configuration settings. These previously stored configuration settings may have been stored by the user himself/herself. Alternatively, other users or enterprises may have defined these previously stored configuration settings. In this case, the user may not have to provide the configuration settings from scratch. The user may also edit or modify one of these previously stored configuration settings to create a new configuration setting.

Based on the configuration settings set by the user and the presentation requirement provided, a plurality of existing slides satisfying the presentation requirements and the configuration settings are identified at 304. Data from the plurality of existing slides is extracted and classified using existing presentations classifier module 206, which has been explained in detail in conjunction with FIG. 2. Data extracted for an existing slide may include, but is not limited to file name, name of sections includes in the existing slide, name of creator of the existing slide, role of the creator of the existing slide, date of creation of the existing slide, and percentage of technical content in the existing slide. More data may be extracted based on additional requirements.

Thereafter, using the information retrieved from existing presentations classifier module 206, confidence scores are computed at 306 for each of the plurality of existing slides across a plurality of categories associated with the presentation requirements gathered from the user. Confidence score computed for an existing slide is indicative of relevance of that existing slide with respect to user specified criteria for creating the presentation. Higher is the confidence score for a given existing slide, higher is the relevance of that existing slide to be used for creating the presentation.

The plurality of categories across which the confidence scores are computed may include, but are not limited to a category associated with each of the audience type preference, the technical or non-technical nature of content of the presentation, source of data used to create existing presentations, roles of existing presentation creators, and presenter notes.

To compute confidence score for an existing presentation that includes multiple slides in the category of "audience type preference," the user first specifies the audience type preference for the presentation the user wants to create. For the existing presentation, it is determined whether it has been presented to an audience multiple times. If yes, the audience for the first presentation session of this existing presentation is determined. Using details retrieved for the audience, role of each member of the audience is determined based on mapping of employee IDs with associated roles of each member. Thereafter, highest role amongst roles assigned to each member of the audience is determined. As roles are mapped to audience types, the audience type for the highest role is identified for the existing presentation.

In case the audience type is mapped to multiple roles, then confidence score for the audience type is computed for each role using weighted average for each of these roles. By way of an example, the audience type identified is CXO. CXO is mapped to multiple roles, i.e., CEO, CIO, CFO, CTO, and CMO. Weights assigned to these roles for the audience type CXO are as follows: CEO→5, CIO→4, CFO→3, CTO→2, and CMO→1. Table 4 illustrates the assignment of these weights to different roles mapped to an audience type. The score thus determined for the existing presentation would be applicable to each slide in the existing presentation.

**TABLE 4**

| Roles Mapped to Audience types → | CEO | CIO | CFO | CTO | CMO |
|---|---|---|---|---|---|
| Weight | 5 | 4 | 3 | 2 | 1 |

Further, to compute confidence score for an existing slide in the category of "technical or non-technical nature of content," technical and non-technical words are extracted from the existing slide. During such extraction of words, stop words (for example, the, a, an, of, and for) are ignored. The determination regarding a word being technical or non-technical may be made using a repository of technical and non-technical words. After the extraction, number of technical words and the number of non-technical words are calculated. Each of these numbers are then compared with the total number of technical and non-technical words to determine whether the existing slide is technical or non-technical. By way of an example, the score for this category may be computed as illustrated in table 5.

**TABLE 5**

| | Technical | Non-Technical | Total number of Keywords |
|---|---|---|---|
| Number of Keywords | 25 | 10 | 35 |
| Score | 0.71 | 0.29 | |

Thus, the existing slide has 71 percent technical content and 29 percent non-technical content. In other words, the existing slide is a technical slide. The score for the existing slide may be computed using the equation given below:

$$\text{Score} = \text{Number of keywords in a given category (Technical/non-technical)} \, / $$
$$\text{Total number of keywords on both technical and non-technical categories}$$

Confidence score for the category of "creator role" for an existing presentation may be computed using role of the creator of the existing presentation and the number of time the existing presentation has been revised or modified. The score computed for the existing presentation is applicable to each slide in the existing presentation.

When the existing slide is in its original version and has not been modified at all, the role of the creator of the existing slide is the role that is considered to compute the score. Further, when the creator role specified by the user while providing "Creator Role" presentation requirement, matches with the role of creator of the existing slide and the user himself is the creator of the existing slide, the score for the existing slide would be 1. However, if the existing presentation has been modified by a user whose role is either one level higher or one level lower than the role of the creator, the score of the existing presentation would be 0.66 times the score that would have been computed, had the existing presentation not been modified at all. Similarly, when the existing presentation has been modified by a user whose role is either more than one level higher or more than one level lower than the role of the creator, the score of the existing presentation would be 0.33 times the score that would have been computed, had the existing presentation not been modified at all.

Further, the confidence score for the category of "Source of data used to create an existing slide" for an existing presentation is computed based on relation of the creator of existing slide with the user. The score computed for the existing presentation is applicable to each slide in the existing presentation. These relations may be defined within the system. In an exemplary embodiment, when the existing slide is created by the user himself/herself, the confidence score is 1. When the existing slide is created by a person who is related to the user and the existing slide is modified by the user, the sore is 0.66. However, in this case, if the existing slide is not modified by the user, the score is 0.5. Further, when the existing slide is created by a person who is unrelated to the user and the user modified the existing slide, the score is 0.4. However, in this case, when the existing presentation has not been modified by the user, the score is 0.3. In an exemplary embodiment, instead of using relation of the person with the user, a popularity score assigned to the person may be used to compute the score.

The confidence score of an existing slide for the category of "Presenter Notes" may be computed using similarity between search strings entered by the user and text of the presenter notes included in the existing presentation. In an exemplary embodiment, word2vec may be used to calculate the average vector for all words in every sentence used in the existing slide. Thereafter, cosine similarity between the vectors may be used. The values thus computed may be normalized to get a value between 0 to 1, which would represent the confidence score for the existing slide. It will apparent to a person skilled in the art that other similar methodologies might be used to compute score for this category.

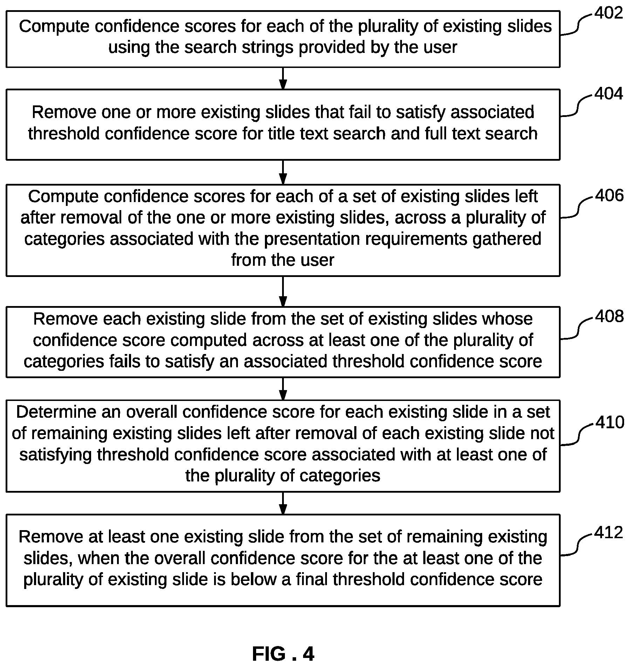

Each of the plurality of categories may have an associated threshold confidence score that has been provided by the user as part of the configuration settings. In an embodiment, these associated threshold confidence scores may be used to remove one or more existing slides, when confidences score computed for the one or more existing slides across one or more of the plurality of categories fails to satisfy an associated threshold confidence score. In other words, an existing slide may be removed, when a confidence score computed for the existing slide across a category is below a threshold confidence score associated with that category. This is further explained in detail in conjunction with FIG. 4.

In an embodiment, before computing confidence scores across the plurality of categories, confidence scores may be computed for the search strings provided by the user. A first set of confidence scores for the plurality of existing slides may be computed using the search strings provided by the user to perform a full text search and the second set of confidence scores using the search strings provided by the user to perform a title text search. The first and second set of confidence scores are computed for each section of the presentation being created. These confidence scores may also be used to remove those existing slides that fail to satisfy threshold confidence score requirement for full text search or title based search. By way of an example, the presentation that the user wants to create may have multiple sections: Section 1, section 2, section 3, and section 4. For each of these sections, both first and second set of confidence scores are computed by comparing: search strings provided by the user to perform a title text search with titles of each of the plurality of existing slides and search strings provided by the user to perform a full text search with full text of each of the plurality of existing slides. Confidence scores may be computed using methodology discussed above for computing confidence score in the category of presenter notes.

Thereafter, for each section, only those existing slides are displayed to the user that satisfy threshold confidence score requirements for the title based search and the full text based search. In this example, the threshold confidence score for the title text may be fixed at 0.9 and the threshold confidence score for full text search may be fixed at 0.8. Only those existing slides are displayed to the user that satisfy both the threshold confidence score requirements and have a cumulative confidence score greater than or equal to 0.85. It will be apparent to a person skilled in the art that instead of using cumulative confidence score, threshold confidence score for title text search and full text search may have to be individually satisfied for an existing slide to be displayed. These existing slides may be displayed for each section of the presentation along with their respective cumulative confidence scores. This is illustrated in table 6. Thereafter, confidence scores across the plurality of categories are only computed for these existing slides and not for all existing slides in the plurality of existing slides.

**TABLE 6**

| Section 1 | | | Section 2 | | | Section 3 | | | Section 4 | |
|---|---|---|---|---|---|---|---|---|---|---|
| S1 | 0.99 | | S11 | 0.89 | | S18 | 0.95 | | S30 | 0.95 |
| S2 | 0.97 | | S17 | 0.89 | | S19 | 0.93 | | S32 | 0.93 |
| S3 | 0.95 | | S3 | 0.85 | | S20 | 0.91 | | S15 | 0.91 |
| S4 | 0.93 | | S13 | 0.85 | | S21 | 0.89 | | S38 | 0.89 |
| S5 | 0.91 | | S19 | 0.85 | | | | | | |

After computing confidence scores for the plurality of existing slides across the plurality of categories, an overall confidence score is determined for each of the plurality of existing slides at 308. The overall confidence score is determined using: the confidence scores computed for each existing slide across the plurality of categories, weights associated with each of the plurality of categories, and a dynamicity index, when associated with an existing slide. In an exemplary embodiment, the overall confidence score for an existing slide may be computed using the equation give below:

$$Sn = (Wat * CSat) + (Wtnt * CStnt) + (Wpn * CSpn) + (Wcr * CScr) +$$
$$(Wsrc * CSsrc) + \text{Dynamicity Index}$$

where,

Sn = Overall confidence score of nth existing slide
Wat = Weight assigned to the category of "Audience type Preference"
Wtnt =Weight assigned to the category of "Technical or Non-technical nature of content"
Wpn =Weight assigned to the category of "Presenter Notes"
Wcr = Weight assigned to the category of "Roles of Existing Presentation Creators"
Wsrc = Weight assigned to the "Source of data used to create an existing slide"
CSat = Confidence score for "Audience type Preference"
CStnt = Confidence score for "Technical or Non-technical nature of content"
CSpn = Confidence score for "Presenter Notes"
CScr = Confidence score for "Roles of Existing Presentation Creators"
CSsrc = Confidence score for "Source of data used to create an existing slide"

The dynamicity index value is added to an existing slide, when the existing slide is exclusively selected or de-selected by any user during creation of a new presentation. When an existing slide is exclusively selected by a user, value of the dynamicity index for the existing slide value is positive and when an existing slide is exclusively de-selected, value of the dynamicity index for the existing slide is negative. An existing slide might have never been exclusively selected or de-selected by any user. In this case, value of dynamicity index for the existing slide would be zero.

By way of an example, to calculate overall confidence score for three existing slides, weights assigned to each of the plurality of categories is given in table 7 and confidence scores for these three existing slides across these categories is given in table 8. Value of dynamicity index for each of these existing slides is considered to be zero.

**TABLE 7**

| Category | Weight |
|---|---|
| Audience type Preference | 0.4 |
| Technical or Non-technical nature of content | 0.2 |
| Presenter Notes | 0.25 |
| Roles of Existing Presentation Creators | 0.075 |
| Source of data used to create an existing slide | 0.075 |
| **Total** | **1** |

**TABLE 8**

| Slide No | Audience type Preference | Technical or Non-technical nature of content | Presenter Notes | Roles of Existing Presentation Creators | Source of data used to create an existing slide |
|---|---|---|---|---|---|
| 1 | 0.8 | 0.8 | 0.8 | 0.7 | 0.3 |
| 2 | 0.7 | 0.8 | 0.9 | 0.7 | 0.9 |
| 3 | 0.6 | 0.9 | 0.5 | 0.7 | 0.9 |

In continuation of the example given above, using the weights given in table 7 and the confidence scores given in table 8, the overall confidence score for slide 1 is computed as 0.76, slide 2 as 0.79, and slide 3 as 0.67. In an embodiment, the overall confidence score may only be computed for those existing slides, that have successfully satisfied threshold confidence score requirement for each of the plurality of categories. This is further explained in detail in conjunction with FIG. 4.

After computing the overall confidence scores for each of the plurality of existing slides, for a given audience type preference and for each section of the presentation being created, each of the existing slides for which overall confidence score had been computed is marked for selection or deselection. This may be displayed to the user on a display. Only those exisitng slides are displayed to the user, for which, the overall confidence score is above a display threshold confidence score. While displaying existing slides satisying the display threshold confidence score, when overall confidence score for an existing slide is above a final threshold confidence score, the existing slide is marked for selection. However, if the overall confidence score for the existing slide is below the finalthreshold confidence score, the existing slide is marked for deselction. In an embodiment, for a particular section of the presentation, if the number of existing slides that have an overall confidence score above the final threshold confidence score are below the minimum number of slides specified by the user for that particular section, then one or more existing slides that have the highest overall confidence score amongst a set of existing slides (each of which has an overall confidence score below the final threshold confidence score) are selected. However, these existing slides are dispalyed to the user only when their overall confidence score is above the display threshold confidence score.

While displaying one or more of the plurality of existing slides, which meet the display threshold confidence score, to the user along with their respective overall confidence scores, relevant existing slides for each section are arranged in decreasing order of their overall confidence scores. By way of an example, referring back to table 3, the configuration settings provided by the user for audience type: AT-1 (illustrated in table 9 given below) is considered as an input from the user. In this case, the existing slides may be displayed along with their respective overall confidence scores as illustrated in table 10.

**TABLE 9**

| Audience Type | Section of the Presentation | Max Slides | Min Slides | Tech Score (%) | Source |
|---|---|---|---|---|---|
| AT-1 | SEC1 | 3 | 1 | 50 | WN |
| | SEC2 | 5 | 2 | 90 | WN |
| | SEC3 | 5 | 2 | 90 | WN |
| | SEC4 | 3 | 2 | 60 | WN |

**TABLE 10**

| Slides | Sections | Creator Name | Creator role | Overall Confidence Score | Selected() |
|---|---|---|---|---|---|
| S1 | | - | - | 95 | YES |
| S2 | SEC1 | - | - | 90 | YES |
| S3 | | - | - | 88 | YES |
| S4 | | - | - | 95 | YES |
| S5 | SEC2 | - | - | 92 | YES |
| S9 | | - | - | 90 | YES |
| S10 | | - | - | 90 | YES |
| S11 | | - | - | 85 | YES |
| S13 | SEC3 | - | - | 80 | YES |
| S14 | | - | - | 79 | NO |
| S17 | | - | - | 70 | NO |

(continued)

| Slides | Sections | Creator Name | Creator role | Overall Confidence Score | Selected() |
|--------|----------|--------------|--------------|--------------------------|------------|
| S18 | | - | - | 85 | YES |
| S19 | | - | - | 82 | YES |
| S20 | SEC4 | - | - | 80 | YES |
| S21 | | - | - | 75 | NO |
| S25 | | - | - | 70 | NO |

In the table 10, for each section of the presentation, the existing slides are displayed in decreasing order of the overall confidence scores. Additionally, in this example, the display threshold confidence score is 70 and the final threshold confidence score is 80, thus each existing slide that has an overall confidence score above 70 is displayed in table 10, and existing slides that have an overall confidence score below 80 are marked "NO" and the one's having overall confidence score of 80 or above are marked "Yes" in the "Selected" column. It will be apparent to a person skilled in the art that though columns for "creator name" and "creator role" in table 10 are empty, these would have requisite details.

After the existing slides are displayed to the user as depicted in table 10 above, the user may provide an input for an existing slide, which modifies "Yes" to "No" or "No" to "Yes." In other words, even when an existing slide is marked "No," the user may select the existing slide to be included in a final list. Such input received from the user would increase the dynamicity index (for example, by a value of 5) for that existing slide and thus the overall confidence score for that existing slide would also increase. Similarly, when an existing slide is marked "Yes," but user de-selects the existing slide, the dynamicity index for that existing slide will be reduced, thereby reducing the overall confidence score for that existing slide. In continuation of the example above the table 10, the user may feel that Slides: S14 (score - 79) and S21 (score - 75) are relevant, and thus may select them for inclusion in the final list by changing "No" to "Yes". This would increase dynamicity index for these existing slides and thus the overall confidence score for both S14 and S21 would increase by a value of 5, which will be used subsequently used while creating a new presentation.

At 310, one or more of the plurality of existing slides that have an overall confidence score below the final threshold confidence score are removed. By way of an example, referring to table 10 given above, the final threshold confidence score is 80, thus, the following slide numbers are removed: S17 and S25. Slide number: S14 and S21 are not removed, as their overall confidence score was increased by a value of 5 in response to user's action. Thereafter, at 312 a list of remaining existing slides from the plurality of existing slides is displayed to the user in decreasing order of the overall confidence score computed for each of the remaining existing slides. The list of remaining existing slides is obtained after removal of the one or more existing slides that have an overall confidence score below the final threshold confidence score. The list when displayed includes a plurality of sub-lists, such that, one sub-list is displayed for each section of the presentation. Each sub-list includes one or more of the remaining existing slides displayed in decreasing order of overall confidence score for an associated section of the presentation.

In continuation of the example given above, after removal of the slides: S17 and S25, the list of remaining existing slides that is displayed to the user is illustrated in table 11 given below:

**TABLE 11**

| Slides | Sections | Creator Name | Creator role | Overall Confidence Score |
|--------|----------|--------------|--------------|--------------------------|
| S1 | | - | - | 95 |
| S2 | SEC1 | - | - | 90 |
| S3 | | - | - | 88 |
| S4 | | - | - | 95 |
| S5 | SEC2 | - | - | 92 |
| S9 | | - | - | 90 |
| S10 | | - | - | 90 |
| S11 | SEC3 | - | - | 85 |
| S13 | | - | - | 80 |
| S14 | | - | - | 79 |

(continued)

| Slides | Sections | Creator Name | Creator role | Overall Confidence Score |
|--------|----------|--------------|--------------|--------------------------|
| S18 | SEC4 | - | - | 85 |
| S19 | | - | - | 82 |
| S20 | | - | - | 80 |
| S21 | | - | - | 75 |

In table 11, the list includes four sub-lists. The first sub-list is displayed for SEC1 and includes the following existing slides: S1, S2, and S3. The second sub-list is displayed for SEC2 and includes the following existing slides: S4, S5, and S9. The third sub-list is displayed for SEC3 and includes the following existing slides: S10, S11, S13, and S14. Lastly, the fourth sub-list is displayed for SEC4 and includes the following existing slides: S18, S19, S20, and S21. The existing slides in each sub-list are displayed in decreasing order of their overall confidence scores.

After the list of remaining existing slides has been displayed to the user, user modification of the list of remaining existing slides is received at 314. The user modification may include selection of one or more new existing slide for inclusion in the list. The new existing slides were never included in the list of remaining existing slides. The user modification may also include de-selecting one or more of the remaining existing slides for exclusion from the list. By way of an example, referring back to table 11 given above, the user may feel that S3 for section 1, S13 for section 3, and S20 for section 4 are not relevant and may mark these for exclusion from the list. The user modification may be received from a user via a GUI, which is illustrated in the exemplary embodiment of FIG. 6C.

Based on the modification input received from the user, at 316, dynamicity index is altered for the one or more new existing slide selected by the user, when they are provided by the user for inclusion in the list. When the user has de-selected one or more existing slides from the list of remaining existing slides, dynamicity index is altered at 316 for the one or more existing slides that are de-selected. Dynamicity index of an existing slide is representative of user confidence in relevance of the existing slide for creating the presentation. Altering the dynamicity index of an existing slide may include either decreasing or increasing the dynamicity index. When a particular existing slide is de-selected by a user, dynamicity index associated with that existing slide is decreased by a predefined value (for example, 5%). This predefined value is configurable and may be modified by the user. In case, the dynamicity index for the existing slide was zero to start with, post de-selection of the existing slide, the dynamicity index for this existing slide would become negative. Similarly, when a new existing slide is selected by a user for inclusion in the list, dynamicity index associated with that new existing slide is increased by the predefined value.

Thus, at a later point of time, when overall confidence score is being computed for an existing slide, which has a positive dynamicity index, the overall confidence score would increase with the value of dynamicity index associated with the existing slide. On the contrary, the overall confidence score for the existing slide would decrease, if the dynamicity index associated with the existing slide has a negative value.

In an embodiment, the degree of altering a dynamicity index of an existing slide may be determined based on a role associated with the user selecting or de-selecting that existing slide. This is further explained in detail in conjunction with FIG. 4.

After receiving the user modification of the list, in an embodiment, a modified list of remaining existing slides may be displayed to the user at 318. The modified list includes new existing slides added by the user and excludes one or more remaining existing slides that were removed by the user. By way of an example, referring back to table 11 given above, after the user selects S3, S13, and S20 for exclusion from the list, the modified list of the remaining existing slides that excludes S3, S13, and S20 for this example is illustrated in table 12 given below:

**TABLE 12**

| Slides | Sections | Creator Name | Creator role | Overall Confidence Score |
|--------|----------|--------------|--------------|--------------------------|
| S1 | SEC1 | - | - | 95 |
| S2 | | - | - | 90 |
| S4 | SEC2 | - | - | 95 |
| S5 | | - | - | 92 |
| S9 | | - | - | 90 |

(continued)

| Slides | Sections | Creator Name | Creator role | Overall Confidence Score |
|--------|----------|--------------|--------------|--------------------------|
| S10 | SEC3 | - | - | 90 |
| S11 | | - | - | 85 |
| S14 | | - | - | 84 |
| S18 | SEC4 | - | - | 85 |
| S19 | | - | - | 82 |
| S21 | | - | - | 80 |

Thereafter, in an embodiment, at 320, data associated with creating the presentation in stored in a database. This data stored for the presentation may be used later, when the presentation is being evaluated as a candidate for creating a new presentation. In an exemplary embodiment, various attributes that are captured and stored for the presentation are illustrated in table 13 given below:

**TABLE 13**

| Attribute | Description |
|-----------|-------------|
| Presentation file name | Unique File name |
| Slide number | Slide number in the main file |
| Title Text | Title text of slide |
| Full text text | Normal text in the Slide |
| Derived or origin | If copied from other file→ Derived otherwise Original |
| Parent Presentation file name | Parent file (Unique File name) from which slide is derived/copied |
| Parent Slide number | Parent slide number (Slide number in the main file) from which slide is derived/copied |
| Technical or Non-technical | Will indicate if the slide is technical or Non-technical |
| Source of data | Has the source originated from internet or data was received from other college or created by a team member |
| Creator role | The role of creator of the slide which is fetched from the LDAP of enterprise based on the modified /created person Active Directoty (AD) ID or user ID, in other words. |
| Date of creation | Date of Creation of slide in both derived or original case |
| Date of Modification | Date of modification of slide in both derived or original case |
| Date of deletion | Date of Deletion of slide in both derived and original case. In this case slide details are in the database but original slide has been deleted. |

The method utilizes multiple dynamic parameters for computation of confidence score for existing slides. This makes the selection of relevant existing slides for creation of a new presentation more effective. One of the factors considered while selecting the existing slides is the audience type specified by the user. This is an important factor to be considered for a presenter, as it ensures good connect with the audience. Moreover, user input taken for selection or de-selection of existing slides is used to compute a dynamicity index for the existing slides. Use of this dynamicity index trains the system which keeps becoming more effective over a period of time.

In an embodiment, each of steps 302 to 320 may be performed by a presentation creating device. The presentation creating device may be any computing device that includes presentation creating system 200 described in FIG. 2.

Referring now to FIG. 4, a flowchart of a method for computing confidence scores for existing slides and removing one or more existing slides based on the confidence scores is illustrated, in accordance with an embodiment. After gathering the presentation requirements and the configuration setting from the user (as explained in detail in FIG. 3), at 402, confidence scores are computed for each of a plurality of existing slides using search strings provided by the user. A first set of confidence scores for the plurality of existing slides may be computed using the search strings provided by the user to perform a full text search and the second set of confidence scores using the search strings provided by the user to perform a title text search. The first and second set of confidence scores are computed for each section of the presentation being created.

At 404, one or more existing slides that fail to satisfy threshold confidence score requirement for full text search and title based search are removed from the plurality of existing slides. By way of an example, the presentation that the user wants to create may have multiple sections: Section 1, section 2, section 3, and section 4. For each of these sections, both first and second set of confidence scores are computed by comparing: search strings provided by the user to perform a title text search with titles of each of the plurality of existing slides and search strings provided by the user to perform a full text search with full text of each of the plurality of existing slides. Thereafter, for each section, only those existing slides are displayed to the user that satisfy threshold confidence score requirements for the title based search and the full text based search.

In this example, the threshold confidence score for the title text may be 0.9 and the threshold confidence score for full text search may be 0.8. Thus, only those existing slides are displayed to the user that satisfy both the threshold confidence score requirements and have a cumulative confidence score greater than or equal to 0.85. It will be apparent to a person skilled in the art that instead of using cumulative confidence score, threshold confidence score for title text search and full text search may have to be individually satisfied for an existing slide to be displayed. These existing slides may be displayed for each section of the presentation being created along with their respective cumulative confidence scores. This is illustrated in table 14 given below. The confidence score across a plurality of categories are only computed for these existing slides.

**TABLE 14**

| Section 1 | | | Section 2 | | | Section 3 | | | Section 4 | |
|---|---|---|---|---|---|---|---|---|---|---|
| S1 | 0.99 | | S11 | 0.89 | | S18 | 0.95 | | S30 | 0.95 |
| S2 | 0.97 | | S17 | 0.89 | | S19 | 0.93 | | S32 | 0.93 |
| S3 | 0.95 | | S3 | 0.85 | | S20 | 0.91 | | S15 | 0.91 |
| S4 | 0.93 | | S13 | 0.85 | | S21 | 0.89 | | S38 | 0.89 |
| S5 | 0.91 | | S19 | 0.85 | | | | | | |

After removing the one or more existing slides that fail to satisfy threshold confidence score requirement for title text search and the full text search, a set of existing slides within the plurality of existing slides are left. Thereafter, at 406, confidence scores are computed for each existing slide in the set of existing slides across a plurality of categories. The plurality of categories and method used to calculate confidence scores across each of the plurality of categories has been explained in detail in conjunction with FIG. 3. In continuation of the example given above, confidence scores across the plurality of categories are computed for the existing slides displayed for section 1 in table 14. These confidence scores for the section 1 of the presentation are illustrated in table 15 given below. It will be apparent to a person skilled in the art that these confidence scores will be computed for each section of the presentation and this example is merely for illustrative purpose.

**TABLE 15**

| Category → Slides ↓ | AudienceType Preference | Technical or Non-technical nature of content | Presenter Notes | Roles of Existing Presentation Creators | Source of data used to create an existing slide |
|---|---|---|---|---|---|
| S1 | 0.8 | 0.8 | 0.8 | 0.75 | **0.3** |
| S2 | **0.7** | 0.8 | 0.9 | 0.8 | 0.9 |
| S3 | 0.8 | 0.9 | 0.5 | 0.9 | 0.9 |
| S4 | 0.9 | 0.7 | 0.8 | 0.85 | 0.8 |
| S5 | 0.75 | 0.85 | 0.95 | **0.5** | 0.75 |

Each of the plurality of categories has an associated threshold confidence score that is provided by the user as part of the configuration settings. These associated threshold confidence scores are used to remove one or more existing slides from the set of existing slides. By way of an example, threshold confidence scores given in table 16 for the plurality of categories are defined by the user while providing the configuration settings.

**TABLE 16**

| Category | Threshold Confidence Score |
|---|---|
| Audience Type Preference | 0.75 |
| Technical or Non-technical nature of content | 0.7 |
| Presenter Notes | 0.5 |
| Roles of Existing Presentation Creators | 0.6 |
| Source of data used to create an existing slide | 0.7 |

At 408, existing slides for which confidence score computed across one or more of the plurality of categories fails to satisfy an associated threshold confidence score is removed from the set of existing slides. In continuation of the example given above, S1 has a confidence score of 0.3 for the category of "Source of Data Used to Create an Existing Slide." As the threshold confidence score for this category given in table 16 is 0.7, S1 is marked for removal. Similarly, S2 is marked for removal as it fails to satisfy threshold confidence score requirement for the category of "Audience Type Preference" and S5 is removed as it fails to satisfy threshold confidence score requirement for the category of "Roles of Existing Presentation Creators." After removal of slides S1, S2, and S5, only slides S3 and S4 are left for further evaluation. This is illustrated below in table 17.

**TABLE 17**

| Category → Slides ↓ | AudienceType Preference | Technical or Non-technical Nature of Content | Presenter Notes | Roles of Existing Presentation Creators | Source of data used to create an existing slide |
|---|---|---|---|---|---|
| S3 | 0.8 | 0.9 | 0.5 | 0.9 | 0.9 |
| S4 | 0.9 | 0.7 | 0.8 | 0.85 | 0.8 |

After removal of the existing slides that fail to satisfy threshold confidence score across one or more of the plurality of categories, a set of remaining existing slides is left. By way of the example given in table 17, the existing slides removed include S1, S2, and S5 and the set of remaining existing slides includes S3 and S4. At 410, an overall confidence score is determined for each existing slide in the set of remaining existing slides. The overall confidence score is computed using the method described in detail in FIG. 3. By way of the example given in table 17, the overall confidence score would be computed for the slides S3 and S4 using the formula given in description of FIG. 3 and weights assigned in table 7. The overall confidence score for the slide S3 is computed as 0.76 and the overall confidence score for the slide S4 is computed as 0.82.

Thereafter, at 412, one or more existing slides from the set of remaining existing slides that have an overall confidence score below a final threshold confidence score are removed. By way of an example, the threshold confidence score for the overall confidence score is set at 0.8. S3 fails to satisfy this threshold confidence score and is accordingly removed. Thus, slide S4 is the only relevant slide left that would be displayed to the user.

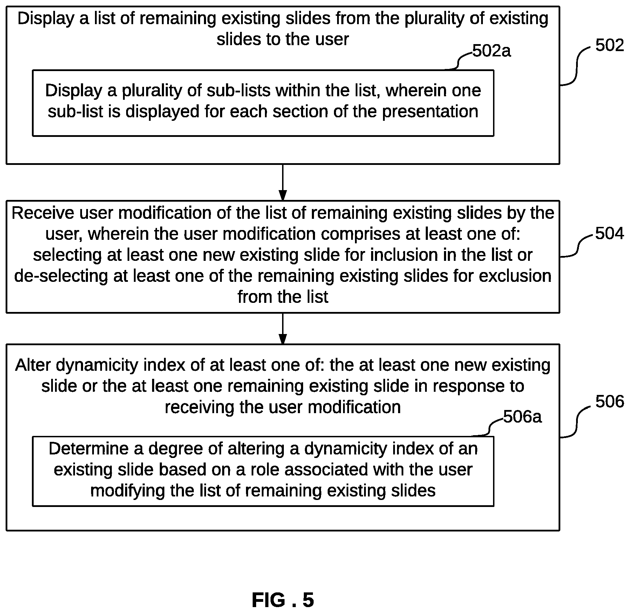

Referring now to FIG. 5, a flowchart of a method for modifying dynamicity index associated with existing slides is illustrated, in accordance with an embodiment. Once one or more of the plurality of existing slides that have an overall confidence score below a final threshold confidence score are removed, a list of remaining existing slides from the plurality of existing slides is displayed to the user at 502. The list is displayed in decreasing order of the overall confidence score computed for each of the remaining existing slides. Displaying the list includes, displaying at 502a, a plurality of sub-lists, such that, one sub-list is displayed for each section of the presentation. Each sub-list includes one or more of the remaining existing slides displayed in decreasing order of overall confidence score for an associated section of the presentation. This has been explained in detail in conjunction with FIG. 3

Thereafter, at 504, user modification of the list of remaining existing slides is received. The user modification may include selection of one or more new existing slide for inclusion in the list. The new existing slides were never included in the list of remaining existing slides. The user modification may also include de-selecting one or more of the remaining existing slides for exclusion from the list. Based on the modification input received from the user, dynamicity index is altered, at 506, for the one or more new existing slides selected by the user, when they are provided by the user for inclusion in the list. However, when the user has de-selected one or more existing slides from the list of remaining existing slides, dynamicity index is altered at 316 for the one or more existing slides that are de-selected.

Altering the dynamicity index of an existing slide may include either decreasing or increasing the dynamicity index. When a particular existing slide is de-selected by a user, dynamicity index associated with that existing slide is decreased by a predefined value. Similarly, when a new existing slide is selected by a user for inclusion in the list, dynamicity index associated with that new existing slide is increased by the predefined value.

Altering includes determining, at 506a, the degree of altering a dynamicity index of an existing slide based on a role associated with the user modifying the list of remaining existing slides. In an embodiment, higher is the role associated with the user in the hierarchy of roles, greater is the degree of altering dynamicity index of an existing slide selected or de-selected by the user. By way of an example, there are five levels in the hierarchy of roles, i.e., A, B, C, D, E, such that, A is the lowest role and E is the highest role in the hierarchy. Thus, when role associated with the user is at level E (i.e., fifth level), the dynamicity index for the existing slide selected or de-selected by the user would be modified by a value of 5. Similarly, when role associated with the user is at level A (i.e., first level), the dynamicity index would be modified by a value of 1.

Referring now to FIGs. 6A, 6B, and 6C Graphical User Interfaces (GUIs) used to gather presentation requirements, configurations settings, and user modification of a list of remaining existing slides are illustrated, in accordance with an exemplary embodiment. A configuration settings GUI 602 in FIG. 6A is provided to a user to gathered configuration settings associated with audience type preference. Configuration settings GUI 602 includes an audience-type column 604 that includes fields to display audience type that is associated with different sections of the presentation being created by the user. The sections of the presentation are displayed in a section column 606 that displays sections associate with a given audience type. For example, audience type 1 (AT1) is associated with sections 1, 2, 3 and 4 of the presentation.

Configuration settings GUI 602 further includes a keywords column 608 that includes fields corresponding to each section mentioned in section column 606. These fields are used to enter keywords that a user feels are relevant for a given section of the presentation. The user also enters the maximum and minimum number of slides for each section using a maximum slides column 610 and a minimum slides column 612. Configuration settings GUI 602 includes a technical score column 614 that allows user to enter percentage of technical content that user wants to include in a particular section of the presentation. By way of an example, in configuration settings GUI 602, the user enters a technical score of 50-100 for section 1 of the presentation. A source column 616 may be used to enter the source that the user seems relevant to extract contents to create a particular section of the presentation.

The user may also use configuration settings GUI 602 to delete a section using buttons provided corresponding to each section in a delete section column 618. Similarly, an insert section column 620 may be used to insert a new section within a particular audience type and an edit section column 622 may be used to edit details entered by the user for a particular section in configuration settings GUI 602. Each of insert section column 620 and edit section column 622 may be provided with clickable buttons to activate the desired function as explained above.

If the user wants to add a new audience type, the user may click on an add new audience type button 624 provided in configuration settings GUI 602. Clicking on add new audience type button 624 opens a new audience type creation screen 626 that may be used by the user to add a new audience type and name and number of sections that the user wants to associate with the new audience type. After the user has entered requisite details in new audience type creation screen 626 and clicked on the save button, the new audience type is displayed in configuration settings GUI 602.

The user may enter the presentation requirements using a presentation requirements GUI 628 given in FIG. 6B. Presentation requirements GUI 628 includes a search text field 630 that is configured to receive free text or search strings, which would be used to search full text of existing slides and a title text field 632 that is configured to receive free text or search strings, which would be used to search title text of existing slides.

Presentation requirements GUI 628 includes an audience type field 634 that is configured to receive user selection of an audience type using a drop down menu. The different audience types may have been defined by the user while providing the configuration settings. This has been explained in detail in conjunction with FIG. 3. Presentation requirements GUI 628 further includes a technical or non-technical field 636 that is configured to receive user specified percentage of technical or non-technical content through a drop down menu.

A source of data field 638 is configured to receive user selection of various sources that user would want to use to create the presentation. The user may be able to select multiple sources from the drop down menu. Similarly, a creator role field 640 includes a drop down menu that may be used to submit user selection of relevant roles of creators of existing slides. Lastly, presentation requirements GUI 628 includes a presenter notes field 642 that is configured to received free text or search strings from the user. The data thus received on presenter notes field 642 is matched with presenter notes available for existing slides. This has been explained in detail in conjunction with FIG. 3.

Once relevant existing slides have been identified using the methods described in FIGs. 3, 4, and 5, a user confirmation GUI 644 given in FIG. 6C, is displayed to the user. User confirmation GUI 644 includes a slides column 646 that lists down existing slides that are relevant to a given section of the presentation based on overall confidence score. A section column 648 displays the section names within the presentation. By way of an example, slides column 646 displays that existing slides S1, S2, and S3 are found to be relevant to the section 1 displayed in section column 648.

User confirmation GUI 644 further includes a creator name column 650, which is used to display name of the creator of an existing slide displayed in slides column 646 and a creator role column 652 that is used to display role associated with creator of an existing slide displayed in slides column 646. The overall confidence score for each existing slide displayed in slides column 646 is displayed in an overall score column 654. By way of an example, for section 1 of the presentation, scores for the existing slides S1, S2, and S3 are displayed as 95, 90, and 88 in overall score column 654.

A view details column 656 includes clickable buttons for each existing slide. A user may click on one of these buttons in order to retrieve details associated with a particular existing slide displayed in slides column 646. The user is also provided an option to remove one or more of these existing slides from user confirmation GUI 644. This option is provided through a selected column 658 that has check boxes for each existing slide. The user may use these check boxes to select or de-select an existing slide. Unchecking a check box for an existing slide translates to removal of that existing slide from user confirmation GUI 644. By way of an example, in user confirmation GUI 644, the user has unchecked checkboxes for the slides S14, S17, S21, and S25. Thus, when the user clicks on a save button 660, these slides will be removed from user confirmation GUI 644.

Various embodiments of the invention provide systems and methods for creating new presentations using existing presentations. The method utilizes multiple dynamic parameters for computation of confidence score for existing slides. This makes the selection of relevant existing slides for creation of a new presentation more effective. One of the factors considered while selecting the existing slides is the audience type specified by the user. This is an important factor to be considered for a presenter, as it ensures good connect with the audience. Moreover, user input taken for selection or de-selection of existing slides is used to compute a dynamicity index for the existing slides. The use of dynamicity index trains the system over time and makes it more effective and accurate over a period of time.

The specification has described systems and methods for creating new presentations using existing presentations. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A method for creating a presentation, the method comprising:

gathering, by a presentation creating device, presentation requirements and configuration settings associated with the presentation requirements from a user;

identifying, by the presentation creating device, a plurality of existing slides satisfying the presentation requirements and the configuration settings gathered from the user;

computing, by the presentation creating device, confidence scores for each of the plurality of existing slides across a plurality of categories associated with the presentation requirements gathered from the user;

determining, by the presentation creating device, an overall confidence score for each of the plurality of existing slides using: the confidence scores computed for each existing slide across the plurality of categories, weights associated with each of the plurality of categories, and a dynamicity index, when associated with an existing slide;

removing, by the presentation creating device, at least one of the plurality of existing slides, wherein the overall confidence score for the at least one of the plurality of existing slides is below a final threshold confidence score; displaying, on a display, a list of remaining existing slides from the plurality of existing slides to the user in decreasing order of the overall confidence score computed for each of the remaining existing slides, wherein the list of remaining existing slides is obtained after removal of the at least one of the plurality of existing slides; receiving, by the presentation creating device, user modification of the list of remaining existing slides by the user, wherein the user modification comprises at least one of: selecting at least one new existing slide for inclusion in the list or de-selecting at least one of the remaining existing slides for exclusion from the list; and altering, by the presentation creating device, the dynamicity index of at least one of: the at least one new existing slide or the at least one remaining existing slide in response to receiving the user modification.

2. The method of claim 1 or claim 2, wherein the presentation requirements comprise at least one of a sample presentation, search strings indicating presentation content, audience type preference, technical or non-technical nature of content, source of data used to create existing presentations, roles of existing presentation creators, or relevance of presenter notes.

3. The method of claim 2, wherein the plurality of categories comprises a category associated with each of audience type preference, technical or non-technical nature of content, source of data used to create existing presentations, roles of existing presentation creators, or presenter notes.

4. The method of any of the preceding claims, wherein the presentation requirements and the configuration settings are gathered via a Graphical User Interface (GUI) comprising predefined fields configured to receive the presentation requirements and the configuration settings.

5. The method of any of the preceding claims, wherein the configuration settings associated with the presentation requirements comprise at least one of a previously stored configuration setting, mapping of user defined roles to system defined roles, a plurality of audience types, association of one of the plurality of audience types with at least one section within the presentation, maximum and minimum number of slides associated with each section of the presentation, percentage of technical and non-technical content associated with each section of the presentation, or type of source associated with each section of the presentation.

6. The method of any of the preceding claims, further comprising removing an existing slide from the plurality of existing slides, wherein confidence score computed across one of the plurality of categories for the existing slide fails to satisfy an associated threshold confidence score.

7. The method of any of the preceding claims, wherein displaying the list comprises displaying a plurality of sub-lists within the list, wherein one sub-list is displayed for each section of the presentation, and each sub-list comprises at least one of the remaining existing slides displayed in decreasing order of overall confidence score for an associated section of the presentation.

8. The method of any of the preceding claims, wherein a dynamicity index of an existing slide is representative of user confidence in the relevance of the existing slide for creating the presentation.

9. The method of any of the preceding claims, wherein altering the dynamicity index of the existing slide comprises one of decreasing or increasing the dynamicity index in response to receiving the user modification.

10. The method of any of the preceding claims, wherein altering comprises:

determining a degree of altering a dynamicity index of an existing slide based on a role associated with the user modifying the list of remaining existing slides, wherein the degree of altering increases with increase in the role associated with the user and decreases with decrease in the role associated with the user.

11. The method of any of the preceding claims, further comprising displaying a modified list of remaining existing slides to the user in response to receiving the user modification of the list of remaining existing slides for user confirmation.

12. The method of any of the preceding claims, further comprising storing data associated with creating the presentation in a database.

13. A presentation creating system comprising:

at least one processor; and

a computer-readable medium storing instructions that, when executed by the at least one processor, cause the at least one processor to perform the method of any of the preceding claims.

14. A computer-readable storage medium comprising instructions that, when executed by a computing device, cause the computing device to perform the method of any of claims 1 to 12.

FIG . 1

**FIG . 2**

EP 3 301 589 A1

Gather presentation requirements and configuration settings associated with the presentation requirements from a user _/—302

Identify a plurality of existing slides satisfying the presentation requirements and the configuration settings gathered from the user _/—304

Compute confidence scores for each of the plurality of existing slides across a plurality of categories associated with the presentation requirements gathered from the user _/—306

Determine an overall confidence score for each of the plurality of existing slides _/—308

Remove at least one of the plurality of existing slides, wherein the overall confidence score for the at least one of the plurality of existing slide is below a final threshold confidence score _/—310

Display a list of remaining existing slides from the plurality of existing slides to the user _/—312

Receive user modification of the list of remaining existing slides by the user, wherein the user modification comprises at least one of: selecting at least one new existing slide for inclusion in the list or de-selecting at least one of the remaining existing slides for exclusion from the list _/—314

Alter dynamicity index of at least one of: the at least one new existing slide or the at least one remaining existing slide in response to receiving the user modification _/—316

Display a modified list of remaining existing slides to the user in response to receiving the user modification of the list _/—318

Store data associated with creating the presentation in a database _/—320

FIG . 3

Compute confidence scores for each of the plurality of existing slides using the search strings provided by the user ⌐402

Remove one or more existing slides that fail to satisfy associated threshold confidence score for title text search and full text search ⌐404

Compute confidence scores for each of a set of existing slides left after removal of the one or more existing slides, across a plurality of categories associated with the presentation requirements gathered from the user ⌐406

Remove each existing slide from the set of existing slides whose confidence score computed across at least one of the plurality of categories fails to satisfy an associated threshold confidence score ⌐408

Determine an overall confidence score for each existing slide in a set of remaining existing slides left after removal of each existing slide not satisfying threshold confidence score associated with at least one of the plurality of categories ⌐410

Remove at least one existing slide from the set of remaining existing slides, when the overall confidence score for the at least one of the plurality of existing slide is below a final threshold confidence score ⌐412

**FIG . 4**

Display a list of remaining existing slides from the plurality of existing slides to the user 502a 502

Display a plurality of sub-lists within the list, wherein one sub-list is displayed for each section of the presentation

Receive user modification of the list of remaining existing slides by the user, wherein the user modification comprises at least one of: selecting at least one new existing slide for inclusion in the list or de-selecting at least one of the remaining existing slides for exclusion from the list 504

Alter dynamicity index of at least one of: the at least one new existing slide or the at least one remaining existing slide in response to receiving the user modification 506a 506

Determine a degree of altering a dynamicity index of an existing slide based on a role associated with the user modifying the list of remaining existing slides

FIG . 5

| Audience Type (AT) | Section | Keywords | Max Slides | Min Slides | Tech Score | Source | Delete Sec | Insert Sec | Edit Sec |
|---|---|---|---|---|---|---|---|---|---|
| AT1 | SEC1 | KW1, KW2, KW3, KW4. | 3 | 1 | 50-100 | WN | | | |
| | SEC2 | KW2, KW4, KW5, KW6. | 5 | 2 | 90-100 | WN | | | |
| | SEC3 | KW6, KW7, KW8, KW9. | 5 | 2 | 90-100 | WN | | | |
| | SEC4 | KW10, KW11, KW12… | 3 | 2 | 60-100 | WN | | | |
| AT2 | SEC1 | Key words…. | 3 | 1 | 50-100 | WN | | | |
| | SEC5 | Key words…. | 5 | 2 | 70-90 | WN | | | |
| | SEC6 | Key words…. | 5 | 2 | 70-90 | WN | | | |
| | SEC7 | Key words…. | 3 | 2 | 70-90 | WN | | | |
| AT3 | SEC1 | Key words…. | 3 | 1 | 50-100 | - | | | |
| | SEC8 | Key words…. | 5 | 2 | 50-70 | - | | | |
| | SEC9 | Key words…. | 5 | 2 | 50-70 | - | | | |
| | SEC10 | Key words…. | 3 | 2 | 50-70 | - | | | |

604 606 608 610 612 614 616 618 602 620 622

**Add New Audience Type**  624

Cancel

**New Audience Type Creation Screen**

Audience Type Name

Number of Sections

626

Save    Cancel

**FIG . 6A**

**FIG . 6B**

EP 3 301 589 A1

| Slides | Sections | Creator Name | Creator role | Over All Score | View Details | Selected |
|--------|----------|--------------|--------------|----------------|--------------|----------|
| S1 | SEC1 | | | 95 | | |
| S2 | SEC1 | | | 90 | | ✓ |
| S3 | SEC1 | | | 88 | | ✓ |
| S4 | SEC2 | | | 95 | | ✓ |
| S5 | SEC2 | | | 92 | | ✓ |
| S9 | SEC2 | | | 90 | | ✓ |
| S10 | SEC3 | | | 90 | | ✓ |
| S11 | SEC3 | | | 85 | | ✓ |
| S13 | SEC3 | | | 80 | | ✓ |
| S14 | SEC3 | | | 79 | | |
| S17 | SEC3 | | | 70 | | |
| S18 | SEC4 | | | 85 | | ✓ |
| S19 | SEC4 | | | 82 | | ✓ |
| S20 | SEC4 | | | 80 | | ✓ |
| S21 | SEC4 | | | 75 | | |
| S25 | SEC4 | | | 70 | | |

Save  Cancel

**FIG . 6C**

Europäisches
Patentamt

European
Patent Office

Office européen
des brevets

# EUROPEAN SEARCH REPORT

Application Number

EP 17 15 2851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 195 640 B1 (DONNEAU-GOLENCER THIERRY D [US] ET AL) 24 November 2015 (2015-11-24) * column 22, line 7 - line 17 * * figure 1 * * column 22, line 60 - column 23, line 4 * * claims 31,32 * ----- | 1-14 | INV. G06F17/30 G06Q10/10 |
| X | US 2015/177964 A1 (SPIRER GARY [US]) 25 June 2015 (2015-06-25) * paragraph [0073] * * paragraph [0098] * ----- | 1-14 | |

TECHNICAL FIELDS
SEARCHED (IPC)

G06F
G06Q

The present search report has been drawn up for all claims

| Place of search | Date of completion of the search | Examiner |
|---|---|---|
| Berlin | 30 June 2017 | Schmidt, Axel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 2851

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2017

| Patent document cited in search report | | Publication date | Patent family member(s) | Publication date |
|---|---|---|---|---|
| US 9195640 | B1 | 24-11-2015 | NONE | |
| US 2015177964 | A1 | 25-06-2015 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 16177316 A
- IN 201641009412
- EP 16180595 A
- IN 201641009861